# EUROPEAN PATENT APPLICATION

(11) **EP 2 017 238 A1**
(43) Date of publication of application: **21.01.2009**
(21) Application number: 07111641.2
(22) Date of filing: 03.07.2007
(51) Int. Cl.: C04B 7/02, C04B 7/44

(54) **Method for increasing the reflectance of cement**

(71) Applicant: AALBORG PORTLAND A/S, 9100 Aalborg (DK)
(72) Inventor: Herfort, Duncan, 9520 Skørping (DK); Macphee, Donald Elliot, Insch, Aberdeenshire, Scotland AB52 6QT (GB); Duffy, John Alastair, Aberdeen, Scotland, AB15 5DR (GB)
(74) Representative: Plougmann & Vingtoft A/S

(57) **Abstract**

The present invention relates to Portland cement products and the use of at least one element selected among the group consisting of phosphorous, sulphur, vanadium and fluorine to increase the reflectance of Portland cement containing iron and silicate phases by incorporating said at least one element selected among the group consisting of phosphorous, sulphur, vanadium and fluorine into the silicate phases. This provides a method, which increases the reflectance of Portland cement produced from raw materials with a given content of iron. Further, it provides advantages in terms of costs and a reduced number of steps in the industrial manufacture. In addition, it provides an alternative way of disposing of at least one element selected among the group consisting of phosphorous, sulphur, vanadium and fluorine containing waste material

## Description

### Technical field of the invention

The present invention relates to a method of increasing the reflectance of cement. In particular the present invention relates to a method of increasing the reflectance of Portland cement comprising iron by incorporating at least one element selected among the group consisting of phosphorous, sulphur, vanadium and fluoride at high temperature.

### Background of the invention

White Portland cement is produced from raw materials with low contents of chromophores such as manganese, chromium and iron. Of these iron is the most ubiquitous with contents in the final clinker or cement invariably targeted at less than 0.5% (determined as Fe₂O₃) in order to achieve acceptable reflectance. However, even at otherwise acceptably low iron contents the clinker needs to be quenched from as high a temperature as possible, preferably over 1100°C, in order to minimise the oxidation of Fe²⁺ to Fe³⁺ on cooling, and to prevent ordering of Fe³⁺ or exsolution as discrete iron.

The quenching is achieved using water, either by spraying water onto the clinker as it leaves the kiln to the cooler, or in the cooler itself in which case the cooler is usually a type of rotary cooler. Regardless of how the water is used for cooling, a disadvantage of this is that the heat lost cannot be recovered using conventional technology in the production of white Portland cement. The heat consumption therefore increases by between 50 and 100% depending on the efficiency of the system. Apart from the increased fuel consumption that this involves, the increased thermal load increases the volume of gas, which reduces clinker output from the kiln. In addition, because the chemical reactions involved in the production of white Portland cement clinker also involve higher material temperatures in the so-called burning zone, output of clinker from the kiln is invariably less than half that of an efficient kiln for the production of conventional grey Portland cement clinker.

Another disadvantage of white Portland cement clinker production, in addition to higher fuel consumption and lower clinker output noted above, is the constraints on the raw materials that can be used, particularly with respect to their contents of transition metals or chomophores. The most ubiquitous of these is iron as noted above.

The white Portland cements and the processes for manufacturing them known today suffer from several inefficiencies. Firstly because white Portland cements merely exhibit tolerable reflectance and secondly because, the processes of producing white Portland cement are cost inefficient, thus significantly affecting the selling price of the marketed product. Accordingly there exists a need for an additional and cost effective method of increasing reflectance of cement, thus providing a product having increased reflectance substantially without affecting quality.

GB 284 294 relates to a process for the manufacture of white Portland cement from coloured for example, ferruginous, raw materials, by which it is possible to produce cement. The process consists of adding to the raw ground material inorganic substances other than chlorides of the alkalis and alkaline earths which on heating give colourless melts with the colouring components of the raw materials. Those melts are usually formed well below the sintering temperature of the clinker, so that the colouring constituents are already combined and then no longer form coloured ferrates or silicates when the raw materials are sintered together, and the colouring constituents are not volatilised off as chlorides. Such substances as phosphates or borates are suitable and may be used if desired in conjunction with metallic halogen such as calcium fluoride and calcium chloride. The clinkers formed in the process are of an ivory to a light yellow shade, and are worked up in the usual way to form cement. This patent further describes that reducing agents are also added to the raw material or it is heated in a highly reducing zone. According to the patent the colouring iron oxide will be reduced to the metal which can then easily be separated from the prepared cement in the dry way, for example by magnetic means.

US 5092932 disclose active mineral additives to binding materials with higher hydraulic activity and whiteness produced by heat treatment of granulated blast furnace or phosphatic slag. According to this patent, additives with whiteness of 80-96% are produced on the basis of phosphatic slag, and the indicated heat treatment is accompanied by oxidation of phosphides and sulphides of iron and manganese to their colorless or poorly colored phosphates, sulphates, phosphites, sulphites and hydrophosphites, and further, this results in the transformation of okermanite into gelinite, α-wollastonite into β-wollastonite, the latter of which is noted for a higher hydraulic activity and a lower susceptibility to coloring and isomorphous capacity. Finally, the patent indicates that the described invention will find application in the production of cement, in particular white and coloured Portland cement employed for the finishing of buildings and various structures, Portland cement with mineral additives, Portland blast furnace cement and slag binding materials with modified properties.

US 5584926 describes a cement composition consisting of (a) from 50% to 97% by weight (calculated on the total composition) of a Portland cement clinker, the sulfur content of which is from 0.5% to 10% by weight expressed as SO₃ and the fluorine content of which is from 0.13% to 1.00% by weight expressed as F, and (b) from 3% to 50% by weight (calculated on the total composition) of an extender containing a carbonate selected from calcium carbonate, magnesium carbonate, calcium magnesium carbonate and mixtures thereof as its main constituent and having a median particle size (d₅₀) of below 14 µm. Preferably, the total content of C₃S and C₂S in the Portland cement clinker is at least 65%.

Hence, there exists a need for an alternative route for the manufacture of white Portland cement. Such a method would preferably increase the reflectance of Portland cement produced from raw materials with a given content of iron. Further, it may provide advantages in terms of costs and/or a reduced number of steps in the industrial manufacture. In addition, it may provide an alternative way of disposing of at least one element selected among the group consisting of phosphorous, sulphur, vanadium and fluorine containing waste materials.

The prior art fails to disclose the manufacture of white Portland cement, from starting materials with a low content of iron, wherein the reflectance is increased by the incorporation of at least one element selected among the group consisting of phosphorous, sulphur, vanadium and fluoride into the silicate phases under non-reducing conditions.

### Summary of the invention

An object of the present invention relates to an improved method of manufacturing white Portland cement from starting materials with a low content of iron. A further object is to provide a new Portland cement material.

Thus, one aspect of the invention relates to the use of at least one element selected among the group consisting of phosphorous, sulphur, vanadium and fluoride to increase the reflectance of Portland cement comprising iron and silicate phases by incorporating the at least one element selected among the group consisting of phosphorous, sulphur, vanadium and fluoride into the silicate phases. The at least one element selected among the group consisting of phosphorous, sulphur, vanadium and fluoride may be incorporated into the silicate phases during production of the cement.

Another aspect of the present invention relates to a product obtainable according to any of the uses of the present invention, preferably wherein phosphorous is used to increase the reflectance of the cement. Naturally, all of the ranges of components and/or elements mentioned for the uses may be applicable for the products as well.

Yet another aspect of the present invention is to provide a Portland cement having an average reflectance of at least a value selected among 82, 83, 84, 85, 86, 87, 88, 89, 90, 91, 92, 93, 94 comprising 0.01 - 1.0 % iron, and 0.01 - 2.0 % phosphorous incorporated into the silicate phases, preferably under non-reducing conditions. The iron may be in the form of Fe³⁺.

Still another aspect of the present invention is to provide a Portland cement product comprising:
a. 0.01 to 1 % Fe₂O₃
b. 0 to 20% C₃A
c. At least 50% C₂S + C₃S
d. 0 to 35% limestone addition
e. 0.1 to 4% phosphorous compound(s).
Phosphorous compound(s) comprise phosphorous, and the amounts expressed are the corresponding amount of P₂O₅. Suitable minimum reflectance values comprise a value selected among 82, 83, 84, 85, 86, 87, 88, 89, 90, 91, 92, 93, 94. The phosphorous may be incorporated into the silicate phases under non-reducing conditions. The Portland cement product may comprise up to 100% C₂S + C₃S, except for iron and phosphorous compounds, 50 to 80% C₂S + C₃S, such as 55 to 75% C₂S + C₃S, e.g. 60 to 70% C₂S + C₃S.

Still another aspect of the present invention is to provide a Portland cement product comprising
a. 60 to 99 % Portland cement clinker
b. 0 to 35 % limestone;
   wherein the Portland cement clinker comprises:
c. 0.01 to 1% Fe₂O₃
d. 0 to 20% C₃A
e. 0.1 to 4.0% phosphorous compound(s).
The composition of the clinker would usually meet the requirements of EN 197-1:2000, section 5.2.1 [5], and the C₃A content is calculated from the Al₂O₃ and Fe₂O₃ contents in wt% in the clinker according to C₃A = 2.650 * Al₂O₃ - 1.692 * Fe₂O₃. The Portland cement may comprise 60 to 80% Portland clinker, such as 75 to 90% Portland cement clinker.

Still another aspect of the present invention is to provide a Portland cement clinker product comprising:
a. 0.01 to 1% Fe₂O₃,
b. 0 to 20% C₃A, and
c. 0.1 to 4.0% phosphorous compound(s).

The meaning of a number of terms will be further elucidated below.

"Cement" is a hydraulic binder, i.e a finely ground inorganic material which, when mixed with water, forms a paste which sets and hardens by means of hydration reactions and processes and which, after hardening, retains its strength and stability even under water.

"Portland cement" is cement comprising a finely-ground Portland cement clinker, gypsum and other minor constituents. "Portland cement" may be classified on the basis of two different standards; the ASTM C150 and European EN-197.

"Portland cement clinker" is a hydraulic material which according to the European Standard EN197.1 2000 are required to comprise at least two-thirds by mass of calcium silicates (3 CaO **•** SiO₂ and 2 CaO **•** SiO₂), the remainder consisting of aluminium- and iron containing clinker phases and other compounds. The ratio by mass (CaO)/(SiO₂) must not be less than 2.0 and the content of magnesium (MgO) must not exceed 5% by mass. "Portland cement clinker" is made in a high temperature process that de-carbonates calcium carbonate and chemically combines the remaining components into new high temperature mineral phases.

"Portland white cement" comprises essentially the same properties as ordinary Portland cement. Portland white cement is characterized in that it exhibits increased optical reflectance when compared to Portland cement. If e.g. the colorimetric value of cement (1) is X and the colorimetric value of cement (2) is (X+n) (n being a positive number and X being a number at or above 85), the reflectance is understood to be increased in cement (2).

"Phosphorous" is the chemical element having the symbol P and atomic number 15 in the periodic table. Phosphorous compounds comprise P₂O₅, P₄O₁₀, as well as phosphorous containing materials like phosphate rock, sewage sludge, dried sewage sludge, meat meal, bone meal, phosphate sludge waste, phosphate rich limestone, and phosphate rich rocks. The term "P₂O₅" may be used to express the content of phosphorous in a composition and/or cement, even when it is understood that phosphorous may be present in another form.

"Sulfur" or "sulphur" is the chemical element having the symbol S and atomic number 16 in the periodic table. Sulphurous compounds comprise SO₂ and SO₃, as well as sulphur containing materials like sulphur rock, sulphur rich limestone, sulphur rich rocks, calcium sulfate based minerals such as gypsum, anhydrite, bassinite, phosphor-gypsum, fluoro-gypsum, other alkali earth based sulfates, alunite; or as pyrite or other metal sulfides, calcium sulfite or other metal sulfites. The term "SO₃" may be used to express the content of sulphur in a composition and/or cement, even when it is understood that sulphur may be present in another form.

"Vanadium" is the chemical element having the symbol V and atomic number 23 in the periodic table.

"Fluorine" is the chemical element having the symbol F and atomic number 9 in the periodic table.

The "Y tristimulus value" defined according to the German standard DIN 5033-2 "Farbmessung, Normvalenz-systeme" is the value used throughout this description including examples and subsequent claims to describe the reflectance of the cements or ground clinker. The "Y tristimulus value" is determined relative to 100 % reflectance for barium sulphate according to the German standard DIN 50339-9 "Farbmessung, Weißstandard zur Kalibriering in Farbmessung und Photometrie".

A "Kiln" is a thermally insulated chamber, usually, but not necessarily, a rotary kiln, in which a controlled temperature regime may be produced.

"Kiln feed" relates to the starting material feed into the kiln, the starting materials may be selected among limestone, clays, siliceous sands, shales, fly ash, or any other natural or waste material with the correct composition making it suitable for achieving the desired composition of the end product, including_phosphorous and sulphur containing material.

According to standard cement chemist notation the abbreviation "C₃S", "C₂S" and "C₃A" cover the following:

| Common abbreviation | Chemical Formula | Name of Compound |
|---|---|---|
| C₃S | 3 CaO **•** SiO₂ | Tricalcium silicate |
| C₂S | 2 CaO **•** SiO₂ | Dicalcium silicate |
| C₃A | 3 CaO **•** Al₂O₃ | Tricalcium aluminate |
| C₄AF | 4 CaO **•** Al₂O₃ **•** Fe₂O₃ | Tetracalcium alumino ferrite |

In the present context C₃S, C₂S, C₃A and C₄AF is determined according to the Bogue calculations described in ASTM C150-05 ("Standard Specification for Portland Cement, 2005").

All percentages are by weight of the total weight of the composition, unless otherwise mentioned.

The present invention will now be described in more detail in the following. Further aspects are provided below and in the claims.

### Detailed description of the invention

According to an aspect, the invention relates to the use of at least one element selected among the group consisting of phosphorous, sulphur, vanadium and fluoride to increase the reflectance of Portland cement, wherein said at least one element is incorporated into the silicate phases under non-reducing conditions.

Non-reducing conditions may be achieved by providing a partial oxygen pressure, in the back end of the kiln, of more than 0.5%, preferably more than 1.0%, of the total pressure.

According to another aspect, the invention relates to the use of at least one element selected among the group consisting of phosphorous, sulphur, vanadium and fluoride to increase the reflectance of Portland cement, wherein the cement comprises iron in an amount corresponding to an amount of Fe₂O₃ less than an amount selected among 1.1; 1.0; 0.9; 0.8; 0.7; 0.6; 0.5; 0.4; 0.3; 0.2; 0.2; 0.1; 0.1; 0.05 and 0.02 % by weight.

According to another aspect, the invention relates to said use of at least one element selected among the group consisting of phosphorous, sulphur, vanadium and fluoride, wherein the cement comprises iron in an amount corresponding to an amount of Fe₂O₃ more than an amount selected among 1.0; 0.9; 0.8; 0.7; 0.6; 0.5; 0.4; 0.3; 0.2; 0.2; 0.1; 0.1; 0.05 and 0.01 % by weight.

According to another aspect, the invention relates to said use of at least one element selected among the group consisting of phosphorous, sulphur, vanadium and fluoride, wherein the cement comprises Fe³⁺ in an amount corresponding to an amount of Fe₂O₃ less than an amount selected among 1.1; 1.0; 0.9; 0.8; 0.7; 0.6; 0.5; 0.4; 0.3; 0.2; 0.2; 0.1; 0.1; 0.05 and 0.02 % by weight.

According to another aspect, the invention relates to said use of at least one element selected among the group consisting of phosphorous, sulphur, vanadium and fluoride, wherein the cement comprises Fe³⁺ in an amount corresponding to an amount of Fe₂O₃ more than an amount selected among 1.0; 0.9; 0.8; 0.7; 0.6; 0.5; 0.4; 0.3; 0.2; 0.2; 0.1; 0.1; 0.05 and 0.01 % by weight.

According to another aspect, the invention relates to said use of phosphorous, wherein the phosphorous is used in an amount corresponding to a total amount of P₂O₅ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0; 1.6-2.1; 1.8-2.3; 2.0-2.5; 2.2-2.7; 2.5-3.0; 2.6-3.2; 2.7-3.4; 2.8-3.6; 2.9-3.8; 3.0-4.0 % by weight of said cement.

According to another aspect, the invention relates to said use of sulphur, wherein the sulphur is used in an amount corresponding to a total amount of SO₃ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0; 1.6-2.1; 1.8-2.3; 2.0-2.5; 2.2-2.7; 2.5-3.0 % by weight of said cement.

According to an aspect, the invention relates to said use of sulphur, wherein said sulphur is incorporated into the silicate phases in an amount corresponding to an amount of SO₃ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0 % by weight of said cement.

According to an aspect, the invention relates to said use of vanadium, wherein said vanadium is used in an amount corresponding to a total amount of V₂O₅ selected among 0.01-0.1; 0.02-0.2; 0.03-0.3; 0.05-0.4; 0.1-0.5; 0.2-0.6; 0.3-0.7; 0.4-0.8; 0.5-0.9; 0.7-1.0 % by weight of said cement.

According to an aspect, the invention relates to said use of fluoride, wherein said fluoride is used in an amount selected among 0.01-0.1; 0.02-0.2; 0.03-0.3; 0.05-0.4; 0.1-0.5; 0.2-0.6; 0.3-0.7; 0.4-0.8; 0.5-0.9; 0.7-1.0 % by weight of said cement.

According to an aspect, the invention relates to said use of phosphorous, wherein the source of the phosphorous is selected among phosphate rock, sewage sludge, meat meal, bone meal, phosphate sludge waste, phosphate rich limestone, and phosphate rich rocks.

Some waste materials such as meat and bone meal or sewage sludge which are high in phosphates can be used in the cement kiln since their overall chemical composition generally falls within the range suitable for Portland cement production, and because of their intrinsic heat value. Unfortunately, in many cases additional costs such as transport, drying, incineration taxes, the need to invest in ancillary production equipment if high chloride contents are involved etc. can prove prohibitive. However, with the additional benefits of improved reflectance achieved by this invention after they are converted to higher sales revenue or cheaper raw materials, these costs can be offset to the extent that these waste materials now become economically viable alternative raw materials and fuels.

According to another aspect, the invention relates to said use of sulphur, wherein the source of the sulphur is selected among any sulphur present in raw materials, or added directly to the kiln as calcium sulphate based minerals such as gypsum, anhydrite, bassinite, phosphor-gypsum, fluoro-gypsum, other alkali earth based sulphates, alunite; or as pyrite or other metal sulphides, calcium sulfite or other metal sulphites, or any sulphur present in the fuels.

According to another aspect, the invention relates to said use of vanadium, wherein the source of said vanadium is selected among petroleum coke, natural mineral containing vanadium, vanadium containing industrial by-products, and spent catalyst from oil refineries.

According to another aspect, the invention relates to said use of fluoride, wherein the source of said fluoride is selected among fluorspar, other natural mineral containing fluoride, and fluorine containing industrial by-products.

According to an aspect, the invention relates to said use of at least one element selected among the group consisting of phosphorous, sulphur, vanadium and fluorine, to obtain a cement with a reflectance of at least at value selected among 82, 83, 84, 85, 86, 87, 88, 89, 90, 91, 92, 93, 94.

According to another aspect, the invention relates to said use of at least one element selected among the group consisting of phosphorous, sulphur, vanadium and fluorine according to any of the preceding claims, to increase the reflectance of the cement, as compared to similar cement produced without said use, with at least a value selected among 0.2; 0.3; 0.4; 0.5; 0.6; 0.7; 0.8; 0.9; 1.0; 1.1; 1.2; 1.3; 1.4; 1.5; 1.75; 2.0; 2.25; 2.5; 2.75; 3.0; 3.5; 4.0; 4.5; and 5.0.

According to an another aspect, the invention relates to said use of at least one element selected among the group consisting of phosphorous, sulphur, vanadium and fluorine, wherein the incorporation of at least one element selected among the group consisting of phosphorous, sulphur, vanadium and fluoride into the clinker phase is performed at a temperature above a temperature selected among the group consisting of 1200°C, 1250°C, 1300°C, 1350°C, 1400°C, 1450°C, 1500°C, 1550°C and 1600°C.

According to an another aspect, the invention relates to said use of at least one element selected among the group consisting of phosphorous, sulphur, vanadium and fluoride according to any of the preceding claims, to obtain a cement comprising an amount of C₃S of at least an amount selected among the group consisting of 2, 3, 4, 5, 6, 8, 10, 15, 20, 30, 40, 50, 60, 80, and 90% by weight. Aluminium may stabilise the phases formed according to the present invention.

According to another aspect, the invention relates to a Portland cement product comprising iron in an amount corresponding to an amount of Fe₂O₃ less than an amount selected among 1.1; 1.0; 0.9; 0.8; 0.7; 0.6; 0.5; 0.4; 0.3; 0.2; 0.2; 0.1; 0.1; 0.05 and 0.02 % by weight.

According to another aspect, the invention relates to a Portland cement product comprising iron in an amount corresponding to an amount of Fe₂O₃ more than an amount selected among 1.0; 0.9; 0.8; 0.7; 0.6; 0.5; 0.4; 0.3; 0.2; 0.2; 0.1; 0.1; 0.05 and 0.01 % by weight.

According to another aspect, the invention relates to a Portland cement product comprising phosphorous in an amount corresponding to an amount of P₂O₅ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0; 1.6-2.1; 1.8-2.3; 2.0-2.5; 2.2-2.7; 2.5-3.0; 2.6-3.2; 2.7-3.4; 2.8-3.6; 2.9-3.8; 3.0-4.0 % by weight.

According to another aspect, the invention relates to a Portland cement product comprising sulphur in an amount corresponding to an amount of SO₃ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0; 1.6-2.1; 1.8-2.3; 2.0-2.5; 2.2-2.7; 2.5-3.0 % by weight.

According to another aspect, the invention relates to a Portland cement product comprising 0 to 35%, preferably 0 to 20 %, more preferred 0 to 5 % limestone addition.

According to another aspect, the invention relates to a Portland cement product, comprising 0 to 20%, preferably 3 to 15%, such as 5 to 12%, preferably 7 to 10% C₃A.

### Description of the figure

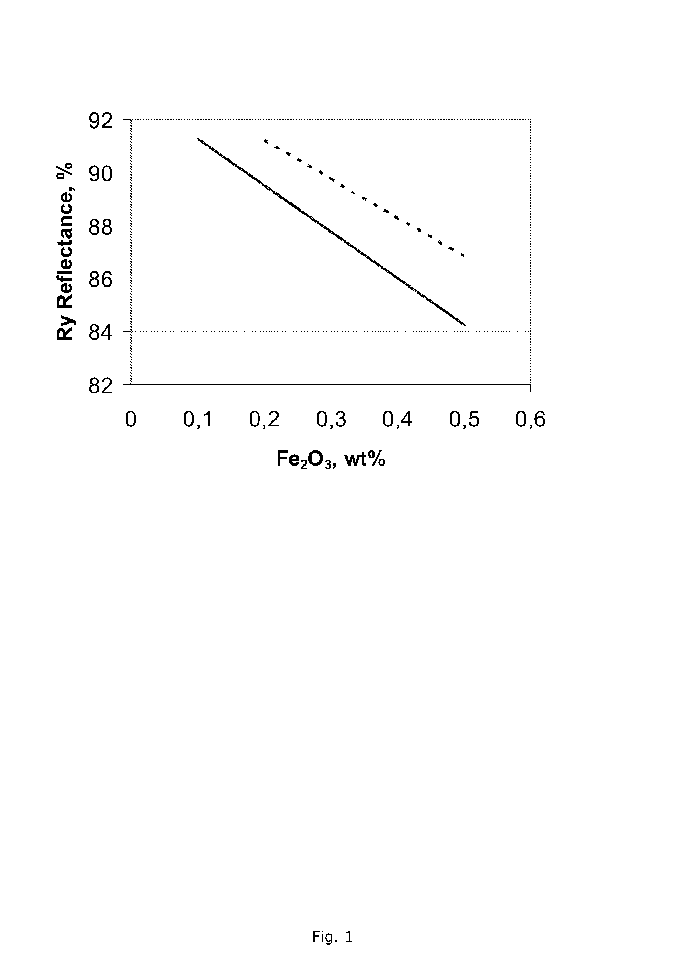

Figure 1 depicts a theoretical example showing the reflectance as a function of iron content for various Portland cement compositions. Best industry practice is indicated at a P₂O₅ content of 0,15% (solid line) and 1,0% (dashed line). As the figure indicates, reflectance may be increased upon the inclusion of phosphorous.

The inventors of the present invention discovered and developed a method of increasing the reflectance in cement that may simultaneously provide cost effective production and improved cement performance.

Without being bound by any theory, it may be hypothesised that the effect that increased phosphorous (and/or sulphur by analogy) contents have on reducing the colouration of the clinker and the final cement is due to the presence of iron. We explain this by the highly acidic nature of phosphorous when present as P⁵⁺. Where Fe³⁺ occurs on the larger, mainly octahedral sites in between silica tetrahedra in alite, and possibly also in belite, the ferric cations will form bonds with between 4 and 7 tetrahedrally bonded oxygen anions. From this, the probability of Fe³⁺ forming a Fe³⁺ - O²⁻ - P⁵⁺ bond can be calculated, since essentially all the phosphorus present in the clinker replaces Si⁴⁺ in the alite and belite as P⁵⁺ on the tetrahedral sites. For example, for clinker containing 1% P₂O₅, the probability that any single Fe³⁺ cation forms such a bond with tetrahedrally coordinated P⁵⁺ must be somewhere between 13 and 22%. Where such bonding occurs, the P⁵⁺ will polarise the electron density of the oxygen ion. This reduces the optical electronegativity of the oxygen (χ*opt(O²⁻)) in the coordination sphere of the iron and raises the band gap for electromagnetic absorption by the [FeO₆], i.e. Eg = 3.72 [χ*opt(Fe³⁺)-χ*opt(O²⁻)], and therefore shifts the CT (charge transfer) transition into the UV region of the electromagnetic spectrum. In other words, little or no visible light is absorbed and the colourising effect of [FeO₆] in close proximity to P⁵⁺ is suppressed. Accordingly, substitution into clinker phases with (i) cations which polarise the oxide ion sufficiently (acidic character), as in the case described above for P⁵⁺ or (ii) anions, into the oxide ion position which are less basic than oxide ion, e.g. F⁻, will increase the difference [χ*ₒₚₜ(Fe³⁺)-χ*ₒₚₜ(O²⁻)] and will also promote this effect.

An further example of this is illustrated by sulfur, which when present in the clinker as S⁶⁺, by a mechanism believed to be essentially identical to that for P⁵⁺ i.e. where S⁶⁺, which is also strongly electropositive replaces Si⁴⁺ on the tetrahedral sites of the silicates, C₃S and C₂S, reducing the optical electronegativity of the oxygen and raising the band gap for electromagnetic absorption by the [FeO₆] chromophore. In addition, it has been shown, that the substitution of either S⁶⁺ or P⁵⁺ for Si⁴⁺ requires the presence of sufficient alumina in the clinker where Al³⁺ also substitutes for Si⁴⁺ by the stoichiometrical amount necessary to balance charge, i.e. the substitution of one cation of Si⁴⁺ by one cation of S⁶⁺ requires the further substitution of two Si⁴⁺ cations by two Al³⁺ cations, and the substitution of one Si⁴⁺ cation by P⁵⁺ requires the further substitution of one Si⁴⁺ by one Al³⁺.

This, of course, means that at e.g. high phosphate and/or sulphate contents in the clinker, aluminium which would otherwise form a calcium aluminate rich melt at the maximum temperature of the clinker in the burning zone of the kiln, and which forms the C₃A mineral on cooling of the clinker, is now incorporated into the silicate phases instead. For example, in the case of normal alkali contents (0.4 to 0.6 wt% Na₂O molar equivalent) and relatively high sulphate and phosphate contents in the clinker of 2% SO₃ and 2% P₂O₅, the equivalent of 6 wt% points C₃A will be incorporated into the silicates, whilst at low alkali contents, at the same phosphate and sulphate, most of the sulphur and virtually all the phosphate is incorporated in the silicates, resulting in a depletion of the actual C₃A by more than 10 wt% points. Since the high C₃A content is important for reaction rates in the kiln, it may be necessary at high levels of phosphate and sulphate, to target C₃A contents based on the normative "Bogue" method of calculation as high as 20% in order to correct for the depletion of C₃A due to substitution.

For the phosphorous to be effective it must be incorporated into the clinker phases at high temperature, preferably above 1100°C. This means that the phosphorous must be added to the feed stream at any point before the kiln, or where the feed is introduced to the kiln, at any point along the length the kiln itself, e.g. where "mid kiln" feeding systems are used, so that the phosphorous becomes incorporated in the clinker phases as the clinkering process takes place at high temperature, normally at a temperature above 1300°C. Alternatively, the phosphorous containing material can be introduced at the front end of the kiln, either into, or past the burning zone, or anywhere in the cooling region of the kiln between the burning zone and the cooler, or at the inlet to the cooler.

The beneficial effect of using phosphate and/or sulfur to reduce the colourising effect of iron can be utilised in a number of ways. For example, where high whiteness or reflectance gives a competitive advantage, this can be achieved by targeting a high phosphate content in the clinker at the otherwise normal low content of iron. It can be used to reduce production costs by relaxing the requirements for the iron content in the raw materials, or by reducing the amount of water for quenching thereby reducing the fuel consumption and increasing output as described above. This is illustrated in the diagram below which shows the likely improvement in the maximum, or "best practice" reflectance that can be achieved over a range of Fe₂O₃ contents in the clinker or finish cement. The best practice at 0.15% P₂O₅ is based on analysis of over 40 different white Portland cements purchased from all major producers worldwide and corresponds the maximum reflectance that can be achieved under optimum conditions of production which primarily concerns quenching the clinker from as high a temperature as possible. The best practice at 1.0% P₂O₅ is based on the trials undertaken by the inventors, some of the results of which are given in the examples given below.

In theory, the P⁵⁺ can be successfully incorporated into tetrahedral sites in the silicates and achieve the beneficial effect of increased reflectance at P₂O₅ contents in the clinker of up to 3 wt%, particularly if the limestone content in the raw meal is adjusted to maintain a high content of C₃S, or if fluorine is added to the clinker at contents ranging up to 1%. Further increases will begin to thermodynamically destabilise the C₃S phase so that at contents in excess of 4 wt% the performance of the cement produced from the clinker is seriously affected, e.g. compressive strengths are significantly reduced and setting times setting times are significantly increased to an extent that outweighs any of the benefits of improved reflectance.

It should be noted that embodiments and features described in the context of one of the aspects of the present invention also apply to the other aspects of the invention.

All references mentioned in the present writh are hereby incorporated by reference.

The invention will now be described in further details in the following non-limiting examples.

### Examples

### Example 1

### Increasing the reflectance by adding dried sewage sludge

White Portland cement clinker was produced in a Rotary cement kiln by adding dried sewage sludge to the kiln feed. The initial content of phosphorous, expressed as P₂O₅, of the clinker produced was 0.15% by mass, which by adding the dried sewage sludge was increased to 1.0% by mass of the clinker. The overall composition of the clinker before the introduction of sewage sludge is shown in the table below:

| | |
|---|---|
| C₃S¹ | 70% |
| C₂S¹ | 20% |
| C₃A¹ | 5% |
| C₄AF¹ | 1% |
| SO₃ | 0.2% |
| Na₂O, molar equivalent | 0.2% |

| | |
|---|---|
| ¹ Determined as according to the Bogue calculations (ASTM C150-05). | |

Apart from the increase in the content of phosphorous, expressed as P₂O₅, other potential changes in the composition of the clinker resulting from the increased use of sewage sludge were compensated for by adjusting the relative contents of other constituents in the kiln feed. The effect of this increase in the phosphorous content from 0.15 wt% to 1.0 wt% was to increase the reflectance of the ground clinker by approximately 2.5 % points as shown in the table below.

| | |
|---|---|
| P₂O₅ content in clinker in wt% | Reflectance² |
| 0.15 | 85.9 |
| 0.4 | 86.6 |
| 0.6 | 87.2 |
| 0.8 | 87.7 |
| 1.0 | 88.3 |

| | |
|---|---|
| ² clinker ground to a specific surface area of 4000 cm²/g and the reflectance (Tristimulus value) determined relative to barium sulphate as according to the German standards DIN 5033-2 "Farbmessung, Normvalenz-systeme" and DIN 50339-9 "Farbmessung, Weißstandard zur Kalibriering in Farbmessung und Photometrie". | |

### Example 2

### Increasing average reflectance of P₂O₅ containing clinker by burning with meat and bone meal

White Portland cement clinker was produced in 4 different white kilns by burning meat and bone meal in the burning zone of the kilns along with the main fuel. The phosphorous from the meat and bone meal was shown to be fully incorporated in the clinker in the same way as the phosphorous from the sewage sludge described in example 1. This resulted in an overall increase in the content of phosphorous expressed as P₂O₅ in the clinker and final cement of 0.3 wt% points from a content of 0.1 wt% without meat and bone meal to 0.4 wt% with meat and bone meal. The effect on the reflectance on the clinker produced in each of the 4 kilns is shown in the table below.

| | Average reflectance of clinker containing 0.1% P₂O₅ without burning meat and bone meal | Average reflectance of clinker containing 0.4% P₂O₅ produced by burning meat and bone meal |
|---|---|---|
| Kiln no. 1 | 86.2% | 87.0% |
| Kiln no. 2 | 86.1% | 86.6% |
| Kiln no. 3 | 86.1% | 87.3% |
| Kiln no. 4 | 86.3% | 87.1% |

### References

German standards DIN 5033-2 "Farbmessung, Normvalenz-systeme" and DIN 50339-9 "Farbmessung, Weipstandard zur Kalibriering in Farbmessung und Photometrie".
ASTM C150-05. Annual Book of ASTM Standards, 2005, Section 4, vol 04.01 "Cement; Lime; Gypsum".
EN 197-1:2000 E, Cement - Part 1: Composition, specifications and conformity for common cements.

## Claims

1. Use of at least one element selected among the group consisting of phosphorous, sulphur, vanadium and fluorine to increase the reflectance of Portland cement comprising iron and silicate phases by incorporating said at least one element into the silicate phases.

2. Use of at least one element selected among the group consisting of phosphorous, sulphur, vanadium and fluorine according to claim 1, wherein said at least one element is incorporated into the silicate phases under non-reducing conditions.

3. Use of at least one element selected among the group consisting of phosphorous, sulphur, vanadium and fluorine according to claim 1 or 2, wherein said cement comprises iron in an amount corresponding to an amount of Fe₂O₃ less than an amount selected among 1.1; 1.0; 0.9; 0.8; 0.7; 0.6; 0.5; 0.4; 0.3; 0.2; 0.2; 0.1; 0.1; 0.05 and 0.02 % by weight.

4. Use of at least one element selected among the group consisting of phosphorous, sulphur, vanadium and fluorine according any of the preceding claims, wherein said cement comprises iron in an amount corresponding to an amount of Fe₂O₃ more than an amount selected among 1.0; 0.9; 0.8; 0.7; 0.6; 0.5; 0.4; 0.3; 0.2; 0.2; 0.1; 0.1; 0.05 and 0.01 % by weight.

5. Use of phosphorous according to any of the preceding claims, wherein said phosphorous is used in an amount corresponding to a total amount of P₂O₅ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0; 1.6-2.1; 1.8-2.3; 2.0-2.5; 2.2-2.7; 2.5-3.0; 2.6-3.2; 2.7-3.4; 2.8-3.6; 2.9-3.8; 3.0-4.0 % by weight of said cement.

6. Use of sulphur according to any of the preceding claims, wherein said sulphur is used in an amount corresponding to a total amount of SO₃ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0; 1.6-2.1; 1.8-2.3; 2.0-2.5; 2.2-2.7; 2.5-3.0 % by weight of said cement.

7. Use of sulphur according to any of the preceding claims, wherein said sulphur is incorporated into the silicate phases in an amount corresponding to an amount of SO₃ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; 1.5-2.0 % by weight of said cement.

8. Use of vanadium according to any of the preceding claims, wherein said vanadium is used in an amount corresponding to a total amount of V₂O₅ selected among 0.01-0.1; 0.02-0.2; 0.03-0.3; 0.05-0.4; 0.1-0.5; 0.2-0.6; 0.3-0.7; 0.4-0.8; 0.5-0.9; 0.7-1.0 % by weight of said cement.

9. Use of fluorine according to any of the preceding claims, wherein said fluorine is used in an amount corresponding to a total amount of F selected among 0.01-0.1; 0.02-0.2; 0.03-0.3; 0.05-0.4; 0.1-0.5; 0.2-0.6; 0.3-0.7; 0.4-0.8; 0.5-0.9; 0.7-1.0 % by weight of said cement.

10. Use of phosphorous according to any of the preceding claims, wherein the source of said phosphorous is selected among phosphate rock, sewage sludge, meat meal, bone meal, phosphate sludge waste, phosphate rich limestone, and phosphate rich rocks.

11. Use of sulphur according to any of the preceding claims, wherein the source of said sulphur is selected among gypsum, anhydrite, bassinite, phosphor-gypsum, fluoro-gypsum, other alkali earth based sulfates, alunite; pyrite, other metal sulfides, calcium sulfite, other metal sulfites, and any sulphur source present in the fuels used in the production.

12. Use of vanadium according to any of the preceding claims, wherein the source of said vanadium is selected among petroleum coke, natural mineral containing vanadium, vanadium containing industrial by-products, and spent catalyst from oil refineries.

13. Use of fluoride according to any of the preceding claims, wherein the source of said fluorine is selected among fluorspar, other natural mineral containing fluoride, and fluorine containing industrial by-products.

14. Use of at least one element selected among the group consisting of phosphorous, sulphur, vanadium and fluorine according to any of the preceding claims, to obtain a cement with an average reflectance of at least at value selected among 82, 83, 84, 85, 86, 87, 88, 89, 90, 91, 92, 93, 94 %.

15. Use of at least one element selected among the group consisting of phosphorous, sulphur, vanadium and fluorine according to any of the preceding claims, to increase the average reflectance of the cement, as compared to similar cement produced without said use, with at least a value selected among 0.2; 0.3; 0.4; 0.5; 0.6; 0.7; 0.8; 0.9; 1.0; 1.1; 1.2; 1.3; 1.4; 1.5; 1.75; 2.0; 2.25; 2.5; 2.75; 3.0; 3.5; 4.0; 4.5; and 5.0 %.

16. Use of at least one element selected among the group consisting of phosphorous, sulphur, vanadium and fluorine according to any of the preceding claims, wherein the incorporation of at least one element selected among the group consisting of phosphorous, sulphur, vanadium and fluorine into the clinker phase is performed at a temperature above a temperature selected among the group consisting of 1200°C, 1250°C, 1300°C, 1350°C, 1400°C, 1450°C, 1500°C, 1550°C and 1600°C.

17. Use of at least one element selected among the group consisting of phosphorous, sulphur, vanadium and fluorine according to any of the preceding claims, to obtain a cement comprising an amount of C₃S of at least an amount selected among the group consisting of 2, 3, 4, 5, 6, 8, 10, 15, 20, 30, 40, 50, 60, 80, and 90% by weight.

18. Product obtainable according to any of the preceding claims.

19. Product obtainable according to any of the preceding claims, wherein phosphorous is used to increase the reflectance of the cement.

20. Portland cement product comprising:
a. 0.01 to 1 % Fe₂O₃
b. 0 to 20% C₃A
c. At least 50% C₂S + C₃S
d. 0 to 35% limestone addition
e. phosphorous compound(s) comprising phosphorous in an amount corresponding to an amount of P₂O₅ of 0.01 to 4%.

21. Portland cement product having an average reflectance of at least at value selected among 82, 83, 84, 85, 86, 87, 88, 89, 90, 91, 92, 93, 94 comprising 0.01 - 1.0 % iron, and 0.01 - 4.0 % phosphorous incorporated into the silicate phases, preferably under non-reducing conditions.

22. Portland cement product according to claim 20 or 21, comprising 50 to 80% C₂S + C₃S, such as 55 to 75% C₂S + C₃S, e.g. 60 to 70% C₂S + C₃S.

23. Portland cement product comprising
a. 60 to 99 % Portland cement clinker
b. 0 to 35 % limestone;
wherein said Portland cement clinker comprises:
c. 0.01 to 1% Fe₂O₃
d. 0 to 20% C₃A
e. phosphorous compound(s) comprising phosphorous in an amount corresponding to an amount of P₂O₅ of 0.01 to 4%.

24. Portland cement product according to claim 23, comprising 60 to 80% Portland clinker, such as 75 to 90% Portland cement clinker.

25. Portland cement clinker product comprising:
a. 0.01 to 1% Fe₂O₃,
b. 0 to 20% C₃A, and
c. phosphorous compound(s) comprising phosphorous in an amount corresponding to an amount of P₂O₅ of 0.01 to 4%.

26. Product according to any of the claims 20 - 25, comprising iron in an amount corresponding to an amount of Fe₂O₃ less than an amount selected among 1.1; 1.0; 0.9; 0.8; 0.7; 0.6; 0.5; 0.4; 0.3; 0.2; 0.2; 0.1; 0.1; 0.05 and 0.02 % by weight.

27. Product according to any of the claims 20 - 26, comprising iron in an amount corresponding to an amount of Fe₂O₃ more than an amount selected among 1.0; 0.9; 0.8; 0.7; 0.6; 0.5; 0.4; 0.3; 0.2; 0.2; 0.1; 0.1; 0.05 and 0.01 % by weight.

28. Product according to any of the claims 20 - 27, comprising phosphorous in an amount corresponding to an amount of P₂O₅ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; and 1.5-2.0; 1.6-2.1; 1.8-2.3; 2.0-2.5; 2.2-2.7; 2.5-3.0; 2.6-3.2; 2.7-3.4; 2.8-3.6; 2.9-3.8; 3.0-4.0 % by weight.

29. Product according to any of the claims 20 - 28, comprising sulphur in an amount corresponding to an amount of SO₃ selected among 0.01-0.3; 0.02-0.4; 0.03-0.5; 0.05-0.6; 0.1-0.7; 0.2-0.8; 0.3-0.9; 0.4-1.0; 0.5-1.1; 0.6-1.2; 0.7-1.3; 0.8-1.4; 0.9-1.5; 1.0-1.6; 1.1-1.7; 1.2-1.8; 1.3-1.9; and 1.5-2.0 %; 1.6-2.1; 1.8-2.3; 2.0-2.5; 2.2-2.7; 2.5-3.0 by weight.

30. Portland cement product according to any of the claims 20 - 29, comprising 0 to 20 %, preferably 0 to 5 % limestone addition.

31. Portland cement product according to any of the claims 20 - 30, comprising 3 to 15%, such as 5 to 12%, preferably 7 to 10% C₃A.
